Europäisches Patentamt

**European Patent Office**

Office européen des brevets

(19)

(11) Publication number: **0 062 543**
A1

(12) # EUROPEAN PATENT APPLICATION

(21) Application number: **82301851.0**

(22) Date of filing: **07.04.82**

(51) Int. Cl.³: **C 02 F 11/14, C 02 F 11/12**

(30) Priority: **07.04.81 US 251896**

(43) Date of publication of application: **13.10.82**
Bulletin 82/41

(84) Designated Contracting States: **BE DE FR GB IT NL SE**

(71) Applicant: **SCHMIDT MANUFACTURING CO.,**
**4880 Colorado Boulevard, Denver Colorado (US)**

(72) Inventor: **Sage, Wesley D., 478 Los Pinos Way, San Jose California 95123 (US)**
Inventor: **Hobbs, Millice F., 15604 Kavin Lane, Monte Sereno California 95030 (US)**

(74) Representative: **Warden, John C. et al, R.G.C. Jenkins & Co. Chancery House 53/64 Chancery Lane, London WC2A 1QU (GB)**

(54) Improved physical-chemical waste treatment method and apparatus.

(57) Method and apparatus for treatment of wastewater sludges, particularly dilute sludges from biological or physical-chemical sewage treatment processes and having 0.7% to 3.0% dry solids. The wastewater sludges are mixed with at least four additives in a reaction tank (22), including a pathogen-killing agent (14), a chemical coagulating agent such as alum (16), a flocculating agent (18) such as an organic polymer, and a filter aid (20); coagulated particles are formed in the reaction tank into a large stable floc of gelatinous aggregates; a low-shear pump (24) transfers the suspended mixture in the reaction tank directly to a filter unit (57) without breaking down the flocculated gelatinous aggregates; and the suspended mixture is dewatered to form an effluent, and a manageable filter cake having the consistency of wet sand with 20% to 35% dry solids. Both the effluent and the filter cakes are decontaminated and detoxified for direct sanitary disposal without further processing. The system time requirements are less than 45 minutes from the input of the wastewater sludges to their discharge in the form of effluent and filter cakes.

# IMPROVED PHYSICAL - CHEMICAL WASTE TREATMENT METHOD AND APPARATUS

This invention relates generally the the waste treatment field, and more specifically to physical-chemical waste treatment processes for treating wastewater sludges and related materials.

Conventional sewage treatment plants typically employ biological techniques to help eliminate organic matter from sewage. More particularly, aerobic bacteria are introduced in order to feed on the organic matter. This biological treatment is usually used in combination with gravity settling techniques to produce an effluent reasonably free of contaminants. Many efforts have been made in the past to reuse both the supernatant effluent drained off the top of the settling tanks as well as the sludge formed at the bottom of the tanks. See, for example, "Clean Water, Nature's Way to Stop Pollution" by Leonard Stevens, E.P. Dutton & Co., Inc., New York, 1974. However, there have been difficulties in dewatering the sludge, as well as detoxifying it, so that it is disposable at conventional dumping sites (Class II Sites) rather than at the specialised sites provided for excessively contaminated material in unmanageable liquid or semi-liquid form (Class I Sites).

Thus, whereas Primary Treatment techniques provide a threshold process for removing large objects and settleable solids that are respectively screened and settled out of suspension; and whereas Secondary Treatment techniques provide a follow-on process employing the biological processes of bacteria for breaking down organic matter, or alternatively employing a physical-chemical process for separating out undesirable suspended or dissolved solids; nevertheless a need for post-treatment or so-called "tertiary" treatment of secondary sewage plant effluent and secondary sewage plant sludge has existed for some time due to the unsatisfactory form and content of the effluent and sludge produced by both biological and physical-chemical secondary sewage processes. While it is true that some of the activated sludge in biological processes is recycled to provide a constant supply of bacteria to feed on the incoming organic material, still a residual accumulation of sludge must preferably be reprocessed before being dumped or transported to specialised disposal sites.

In a typical small sewage treatment plant with daily flows up to about 2 to 3 MGD, the sludges are further processed, for example, in aerobic digesters to reduce the $BOD_5$ of the sludges, settled in gravity settlers, and thickened to about 5% dry solids in gravitational thickeners by the use of polymers. The thickened sludge, which can become septic along with the production of obnoxious odors, can be further processed by conventional centrifugation or filtration to about 7% to 12% dry solids prior to on-site land filling or hauling to a Class I dump. The thickened sludge can also be directly hauled without further processing to a Class I dump.

It has been recognised that both the effluent and the sludge produced by the secondary treatment plants require further processing. Although many techniques have been employed for further or so-called "tertiary" treatment of the effluent, little effort has been spent on developing a satisfactory post-process treatment for wastewater sludges.

Efforts have been made in another direction to develop physical-chemical secondary sewage treatment processes which sought to produce an effluent and filter cake which would require no additional processing. The most pertinent development in this field is the system disclosed in U S Patent No. 4 124 499 issued on November 7, 1978 for Sewage Treatment System. However, while such system provides a suitable alternative to secondary biological systems since both are designed to handle sewages with suspended solids concentrations up to about 0.3% (3000 mg/liter) solids, the System of the aforesaid patent is not designed for and is unsuitable for handling typical dilute sludges produced from other secondary sewage treatment processes with suspended solids concentrations from about 0.7% to 3.0% (7000 mg/liter to 30,000 mg/liter).

Accordingly, it is an object of the present invention to provide a method and apparatus for treatment of wastewater sludges which improves and adapts some of the features disclosed in U.S. Patent No. 4 124 499 for application to wastewater having suspended solids concentrations from about 0.7% to 3.0%. A related object is to dispense the additives into the wastewater material either in advance of or directly into a reactor tank to enable all of the interaction to occur before the suspended mixture is discharged from the reactor tank.

Another object is to provide a new and improved method and apparatus for waste treatment which includes dispensing a chemical coagulating agent for neutralising the residual electrical charges on sludge particles, and dispensing a flocculating agent to form coagulated particles into a gelatinous aggregate. A related object is to provide a low-shear impeller for mixing the materials in the reactor tank, and to provide a low-shear pump for transferring the unsettled mixture from the reaction tank to a filter unit without causing any significant breakdown of the gelatinous aggregate.

A further object is to eliminate the tubular reactor previously used in U.S. Patent 4 124 499 which was maintained airtight and in which coagulation, minor floc formation and pH control occurred during the extended period of reaction time allowed for passage through such elongated reactor. In contrast, in the present invention, it is desirable to provide a short outflow pipe directly connecting the reactor tank with the filter unit to minimise any shear or agitation of the flocculated gelatinous aggregate.

Another object is to provide a preferred form of the invention which maintains the pH range in the system between about 5.5 and 7.0 throughout the process, and to eliminate the need for any airtight reaction compartments in the apparatus.

Yet an additional object is to provide activated carbon as an optional additive which is used selectively and only for soluble material which has not already been converted to suspended solids by biological action or already adsorbed onto carbon by physical-chemical wastewater treatment in a preceding secondary sewage treatment plant.

Still a further object is to incorporate the aforementioned methods and apparatus into a system which dewaters dilute wastewater sludges and related materials

- 6 -  0062543

to manageable filter cakes of about 20% to 35% dry solids, which have the consistency of wet sand and do not produce obnoxious odors, and which also produces a clean liquid effluent that meets the Federal Standards for direct discharge to receiving bodies of water.

Another object is to provide additives which are safely and easily usable in the aforementioned system, and which effectively decontaminate and detoxify the unsettled mixture in the reaction tank as well as bring about the aggregation of colloidal particles into large flocs capable of being filtered by conventional filter systems such as by differential pressure filtration.

According to the invention there is provided apparatus for treatment of wastewater sludges from biological or physical-chemical sewage treatment processes, including in combination:

a reaction tank for receiving the wastewater sludges and for temporarily holding said sludges for mixing with various additives to form an unsettled mixture which includes colloidal material flocculated into a gelatinous aggregate in said tank;

additive control means connected to said reaction tank for dispensing into the wastewater sludges predetermined amounts of (1) a pathogen-killing gent, (2) a chemical coagulating agent for neutralising the residual electrical charges on sludge particles, (3) a flocculating agent to form coagulated particles into a gelatinous aggregate, and (4) a non-compressable filter cake support material;

inflow pipe means connecting said reaction tank with a wastewater sludge storage unit;

an influent pump operatively connected with said inflow pipe means for transferring the wastewater sludges into said reaction tank;

a filter unit for dewaterng the unsettled mixture formed in said reaction tank;

outflow pipe means connecting said reaction tank with said filter unit; and

discharge pump means comprising a low-shear pump operatively connected with said outflow pipe means for transferring the unsettled mixture formed in said reaction tank directly to said filter unit with minimal agitation of the mixture to prevent any significant breakdown of the gelatinous aggregate.

The invention includes as an aspect apparatus for treating wastewater sludges having dry solids in the range of 0.7% to 3.0%, including in combination:

first metering means for dispensing a bactericidal agent into the wastewater sludges;

second metering means for dispensing a flocculating agent taken from the group of high molecular weight organic polymers into the wastewater sludges;

means for dispensing a filter aid into the wastewater sludges;

tank means for gently mixing the wastewater sludges with said bactericidal agent, with said flocculating agent, and with said filter aid to accomplish thorough distribution and interaction of each different material throughout said tank means without breaking down the flocculated gelatinous agreggate formed by said flocculating agent; and

filter means connected with said tank means for dewatering all the suspended solids to produce a hygienic effluent and a filter cake having a dry solids content in the range of 20% to 35%.

The invention includes as an aspect a method of treating wastewater having solids suspended therein, including the steps of:

introducing the wastewater/solid mixture into a reaction container;

· destroying pathogenic organisms in the wastewater/solid mixture;

coagulating the solids which are in colloidal suspension;

flocculating the coagulated material to produce a large substantially stable gelatinous aggregate;

adding a non-compressable filter cake support media;

slowly mixing all the materials in the reaction chamber to facilitate the interaction necessary to thoroughly accomplish the aforesaid destroying, coagulating and flocculating steps and to effect distribution of the filter cake support media throughout the nonsettled mixture formed in the reaction chamber without significantly breaking down the gelatinous aggregate made by said flocculating step; and

dewatering the nonsettled mixture formed in the reaction chamber by passing it through a filter screen including collecting solids on one side of the screen and draining filtrate away from the opposite side of the screen.

An embodiment of the invention is hereafter described with reference to the accompanying drawings, in which:-

Figure 1 is a block diagram of a presently preferred embodiment of the invention; and

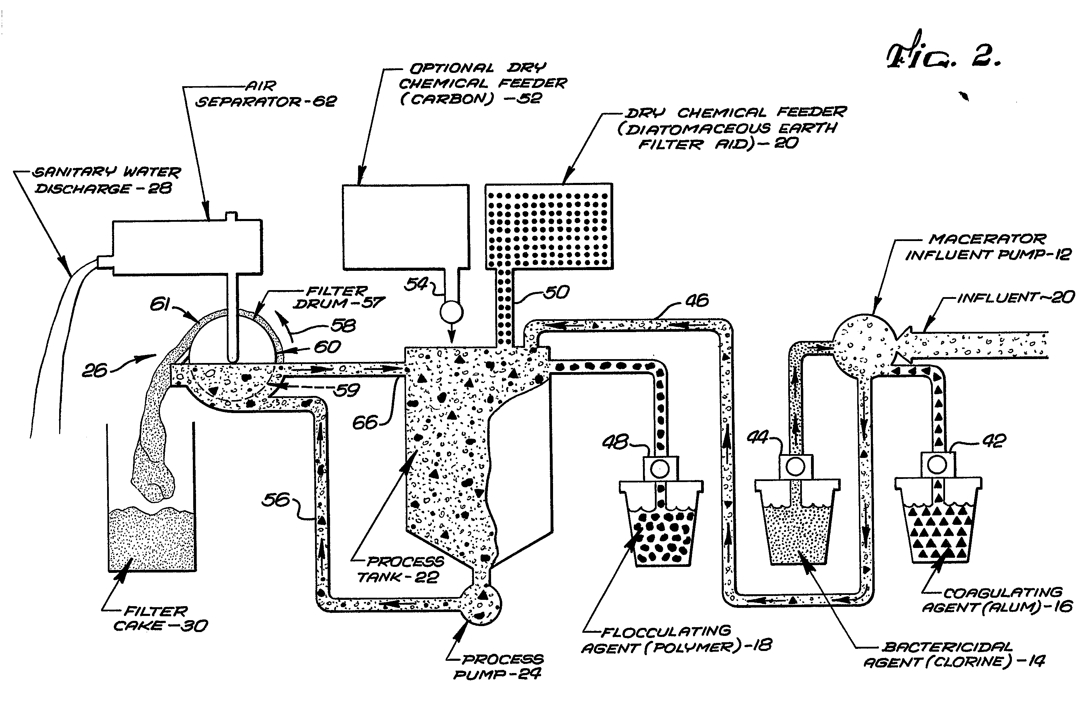

Figure 2 is a schematic flow diagram of the embodiment of Figure 1.

Generally speaking, the invention is designed to process a wastewater/solids influent 10 which passes through a pump 12 for controlling the rate of flow and also providing comminution and premixing of solid particles suspended in the influent. Four additives are dispensed into the influent - namely, a bactericidal agent 14, a coagulating agent 16, a flocculating agent 18, and a filter aid 20. These materials are added in advance of or directly into a processing or reaction tank 22 where further mixing is accomplished by a low-shear impeller (not shown) to allow full distribution and mixing of the various additives with the influent without allowing any significant settling to occur. In order to avoid any breakdown of the flocculated gelatinous aggregate formed in the reaction tank, a low shear process pump discharges the unsettled mixture to a filter unit 26 which dewaters the mixture to produce an effluent 28 and a filter cake 30.

In a presently preferred version, the method and apparatus of the invention are used to process wastewater sludge having 0.7% to 3.0% suspended solids. A complete cycling of a given portion of influent is typically done in less than 45 minutes and sometimes as low as 10 or 15 minutes to produce a manageable filter cake having the consistency of wet sand with 20% to 35% dry solids content. The pH is maintained in the range of about 5.5 to 7.0, and the reaction occurs in vented tanks rather than in an air tight tubular reactor. Acidic or alkaline substances can also be added if necessary to maintain the desired pH range.

Referring more particularly to the illustrated embodiment of the drawings, an inflow pipe 46 connects the influent pump 12 with the reaction tank 22. The influent pump serves as a macerator in which wastewater sludges and other related wastes received from an inlet pipe 40 are comminuted to reduce the size of solid particles to one-half inch or smaller. The pump is a positive displacement pump and preferably includes intakes in the pre-chamber to the macerator unit for receiving the bactericidal agent 14 and the coagulating agent 16. The coagulating agent can include any trivalent cations such as those of the iron and aluminium salts; typically such coagulating agent is taken from the group constituting the double salts of sodium, potassium, ammonium and aluminium sulfate and in the preferred embodiment constitutes alum in a water solution dispensed through a metering pump 42 to coagulate the colloidal matter, primarily by neutralising any residual electrical charges thereon. The bactericidal agent is taken from the group constituting the halogen compounds, and in the preferred embodiment constitutes calcium hypochlorite in a water solution dispensed through a metering pump 44 to destroy pathogenic organisms. Although it is not necessary to add any chemicals in advance of the reaction tank, it is believed that improved mixing and efficiency is achieved by doing so.

When the wastewater sludge is produced by a secondary treatment physical-chemical plant, there may be sufficient alum from such previous treatment to eliminate the need for adding any additional coagulating agent.

The flocculating agent is taken from the group constituting the high molecular weight organic polymers, and includes anionic, cationic, as well as nonionic polymers which are selected in order to achieve optimum results for the particular installation involved. Such polymer is added in a water solution dispensed through a metering pump 48, and effects flocculation of the coagulated material to produce a large reasonably stable floc that can readily be dewatered by filtration.

The filter aid is dispensed from a conventional bin feeder 54 and provides a non-compressable filter cake support media that allows the wastewater solids to be filterable without binding the filter screen. A preferred form is diatamaceous earth which is marketed under the trademark Celite.

To the extent the wastewater contains soluble organic materials that do not coagulate, and which were not previously converted to suspended solids by earlier biological or physical-chemical secondary sewage treatment, an absorption material such as activated carbon 52 may be optionally added through a conventional bin feeder 54 to the reaction tank.

The process pump 24 is a low shear diaphragm pump (in contrast to a high shear type centrifugal pump) and serves to discharge the unsettled mixture from an exit port at the conical bottom of the reaction tank without causing unnecessary shear or agitation of the flocculated gelatinous aggregate. A short outflow pipe 56 connects the reaction tank with the filter unit 26 which is preferably adjacent thereto to provide direct transfer and immediate filtration.

At the filter unit, a cylindrical filter drum 56 is rotated in the direction 58 to move the filter screen from a submerged filter zone 59 through a drying zone 60 to a removal zone 61 where solids are scraped off by a wire, solid knife, or so-called "doctor" blade. Differential pressure is applied to both sides of the filter screen to facilitate the deposit and removal of the filter cake. Thus, the system produces a sanitary filter cake which is relatively dry and clean smelling with only a faint odor of chlorine. This material temporarily stored in a bin 64 can be disposed of in Class II dumps, or burned and reduced to a sterile, inorganic ash. The cake has the appearance of wet sand.

An air separation unit 62, which operates under a slight pressure, allows for deaeration of the effluent from the rotary vacuum filter, and provides the air pressure applied to the filter screen. A pump is provided to remove the liquid effluent from the system when gravity flow is impractical. The effluent is clear and can be discharged or recycled (but not as potable water). Compounds containing nitrogen have been oxidised by the chlorine, while inorganic salts such as calcium and sodium chloride remain in the effluent water.

In order to maintain a relatively constant level of mixture partically submerging the filter drum 57, a backflow pipe 66 provides a gravity actuated return path for carrying excess unfiltered mixture back to the reaction tank.

It will be appreciated from the foregoing description that the invention strikes a rather delicate balance between the high-shear agitation of prior physical-chemical waste treatment processes and the quiescent conditions required for sedimentation techniques used in prior biological waste treatment processes. Thus, the invention achieves sufficient and thorough mixing of all the additives and wastewater solids and maintains the resulting mixture in an unsettled state, while at the same time avoiding the undesirable shearing and agitation that would cause breakdown of the flocculated gelatinous aggregate formed in the reaction tank.

The invention will be further illustrated by the following examples which are given without any intention that the invention be limited thereto. Of course, various changes and modifications can be made to the illustrated embodiment of the previous description and drawings, as well as to the subsequent examples, without departing from the spirit and scope of the invention as recited in the claims which follow these examples.

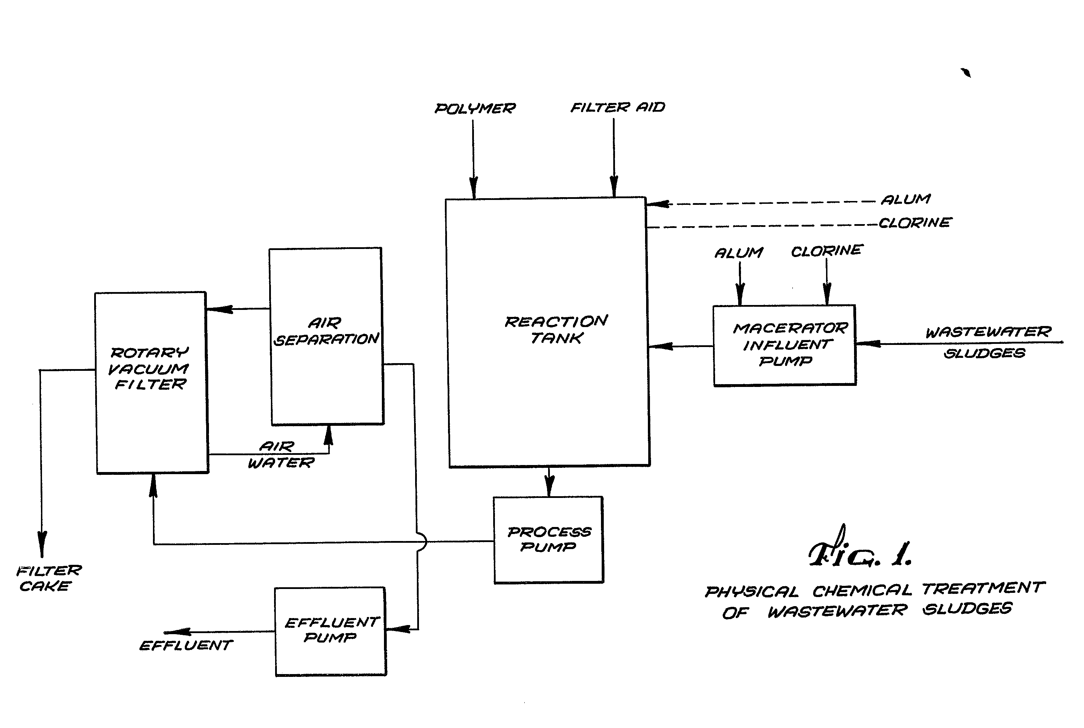

These examples involve the processing of digested wastewater sludges from an aerobic digester, which processing was accomplished by the block diagram method of Fig. 1, with the filter aid and polymer additives being added directly to the reaction tank, and the alum and chlorine additives being added for pre-mixing by the macerator influent pump.

## EXAMPLES

| Digested Sludge | #1 | #2 | #3 |
| --- | --- | --- | --- |
| Volume, gals | 657 | 780 | 644 |
| Total Suspended Solids % by wt. | 1.5 | 1.5 | 1.37 |
| Ph | 6.5 | 6.5 | 6.5 |
| (S.S. as Mg/liter | 15,000 | 15,000 | 13,700) |
| Chemical Usage (lbs/1000 gal) | | | |
| Filter Aid | 259 | 192 | 214 |
| Alum | 3.8 | 3.8 | 3.8 |
| Polymer | 0.8 | 0.8 | 0.8 |
| Calcium Hypochlorite | 0.5 | 0.5 | 0.5 |
| Chemical Usage (gm/liter) | | | |
| Filter Aid | 31 | 23 | 25.6 |
| Alum | 0.46 | 0.46 | 0.46 |
| Polymer | 0.1 | 0.1 | 0.1 |
| Calcium Hypochlorite | 0.6 | 0.6 | 0.6 |

Processing Results

| | | | |
|---|---|---|---|
| Flow Rate, $gpm/ft^2$ of filter screen | 0.21 | 0.21 | 0.25 |
| Effluent | | | |
| pH | 6.4 | 6.4 | 6.4 |
| Turbidity | <10 JTU | <10 JTU | <10 JTU |
| (Jackson Turbidity Unit) | | | |
| Filter Cake | | | |
| lbs | 1326 | 1295 | 958 |
| Dry Sub. % by wt. | 20.2 | 21.0 | 22.4 |
| Avg. Processing Time | | | |
| Minutes | 40 | 40 | 34 |

Improvements in operating technique and the use of different polymers will improve the filter cake dry solids as illustrated below:

Improvements in Cake Dry Solids

| Operating Time | Dry Solids |
|---|---|
| Weeks | % |
| 1 | 22 |
| 4 | 25.0 |
| 6 | 26.7 |
| 7 | 26.2 |
| 11 | 32.6 |
| 13 | 32.8 |

CLAIMS:

1. Apparatus for treatment of wastewater sludges from biological or physical-chemical sewage treatment processes, including in combination:

a reaction tank (22) for receiving the wastewater sludges and for temporarily holding said sludges for mixing with various additives to form an unsettled mixture which includes colloidal material flocculated into a gelatinous aggregate in said tank;

additive control means (42,44,48) connected to said reaction tank for dispensing into the wastewater sludges predetermined amounts of (1) a pathogen-killing agent, (2) a chemical coagulating agent for neutralising the residual electrical charges on sludge particles, (3) a flocculating agent to form coagulated particles into a gelatinous aggregate, and (4) a non-compressable filter cake support material;

inflow pipe means (20) connecting said reaction tank with a wastewater sludge storage unit;

an influent pump (12) operatively connected with said inflow pipe means for transfering the wastewater sludges into said reaction tank;

a filter unit (57) for dewatering the unsettled mixture formed in said reaction tank;

outflow pipe means (56) connecting said reaction tank with said filter unit; and

0062543

discharge pump means (24) comprising a low-shear pump operatively connected with said outflow pipe means for transferring the unsettled mixture formed in said reaction tank directly to said filter unit with minimal agitation of the mixture to prevent any significant breakdown of the gelatinous aggregate.

2.   The apparatus of claim 1 wherein the reaction tank includes a mixer having low shear impeller means for mixing any wastewater sludges with the additives without causing any significant shearing of the flocculated gelatinous aggregate being formed in said reaction tank.

3.   The apparatus of claim 1 wherein said influent pump (12) includes a macerator unit and wherein said control means for both the pathogen-killing agent and the chemical coagulating agent are positioned for dispensing said additives into said inflow pipe means in advance of said macerator unit of said influent pump.

4.   The apparatus of claim 1 wherein said control means for both the flocculating agent and the non-compressable filter cake support material are positioned for dispensing said additives directly into said reaction tank.

5.    The apparatus of claim 1 further including backflow pipe means (66) from said filter unit back to said reaction tank for optionally recycling some of the unfiltered mixture through said reaction tank.

6.    The apparatus of claim 1 further including pH probe means at predetermined points along the path travelled by the wastewater sludges, the unsettled mixture, and the effluent from said filter unit, for monitoring the acidity or alkalinity and for maintaining pH range of substantially 5.5 to 7.0 throughout the process.

7.    Apparatus for treating wastewater sludges having dry solids in the range of 0.7% to 3.0%, including in combination:

    first metering means (44) for dispensing a bactericidal agent into the wastewater sludges;

    second metering means (48) for dispensing a flocculating agent taken from the group of high molecular weight organic polymers into the wastewater sludges;

    means for dispensing a filter aid into the wastewater sludges;

    tank means (22) for gently mixing the wastewater sludges with said bactericidal agent, with said flocculating agent, and with said filter aid to accomplish thorough distribution and interaction of each different material throughout said tank means without breaking down the flocculated gelatinous aggregate formed by said flocculating agent; and

filter means (57) connected with said tank means for dewatering all the suspended solids to produce a hygienic effluent and a filter cake having a dry solids content in the range of 20% to 35%.

8.   A method of treating wastewater having solids suspended therein, including the steps of:

introducing the wastewater/solid mixture into a reaction container (22);

destroying pathogenic organisms in the wastewater/ solid mixture;

coagulating the solids which are in colloidal suspension;

flocculating the coagulated material to produce a large substantially stable gelatinous aggregate;

adding a non-compressable filter cake support media;

slowly mixing all the materials in the reaction chamber to facilitate the interaction necessary to thoroughly accomplish the aforesaid destroying, coagulating and flocculating steps and to effect distribution of the filter cake support media throughout the nonsettled mixture formed in the reaction chamber without significantly breaking down the gelatinous aggregate made by said flocculating step; and

dewatering the nonsettled mixture formed in the reaction chamber by passing it through a filter screen including collecting solids on one side of the screen and draining filtrate away from the opposite side of the screen.

9.   The method of claim 8 wherein said dewatering step includes collecting filter cake from the filter screen having dry solids in the range of 20% to 35%.

10.  The method of claim 9 wherein said collecting step includes moving the filter screen between submerged and exposed positions, and applying differential pressure on both sides of the screen to facilitate the filtration, partial drying of the filter cake; and removal of the filter cake from the screen.

Fig. 1.

PHYSICAL CHEMICAL TREATMENT
OF WASTEWATER SLUDGES

Fig. 2.

AIR SEPARATOR-62

OPTIONAL DRY CHEMICAL FEEDER (CARBON) —52

DRY CHEMICAL FEEDER (DIATOMACEOUS EARTH FILTER AID) —20

SANITARY WATER DISCHARGE - 28

MACERATOR INFLUENT PUMP-12

INFLUENT~20

61

FILTER DRUM-57

54

50

46

58

60

26

59

66

48

44

42

56

PROCESS TANK-22

FILTER CAKE-30

PROCESS PUMP-24

FLOCCULATING AGENT (POLYMER)-18

BACTERICIDAL AGENT (CLORINE) -14

COAGULATING AGENT (ALUM)-16

0062543

European Patent
Office

**EUROPEAN SEARCH REPORT**

Application number

EP 82 30 1851

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 156 636 (FMC)<br><br>*Page 25, claim 1; page 29, claim 14; page 30, claim 16; page 32, claim 21; page 7, lines 21-33; figure 6* & US - A - 4 124 499 (Cat. D,X) | 1,3,4,<br>7,8,10 | C 02 F 11/14<br>C 02 F 11/12 |
| X | FR-A-2 407 174 (SOMAT)<br><br>*Page 3, line 15 - page 5, line 4; page 7, line 18 - page 8, line 26* | 1-3,7,<br>8 | |
| X | GB-A-1 381 678 (A.HEIDRICH)<br><br>*Page 3, lines 20-90* | 1,2,4,<br>6,7,8 | |
| A | US-A-4 192 743 (A.KLEIN)<br>*Column 2, line 39 - column 3, line 23* | 5 | TECHNICAL FIELDS SEARCHED (Int. Cl. 3)<br><br>C 02 F |

The present search report has been drawn up for all claims

| Place of search | Date of completion of the search | Examiner |
|---|---|---|
| THE HAGUE | 01-07-1982 | TEPLY J. |